# EUROPÄISCHE PATENTSCHRIFT

(11) **EP 1 967 831 B1**
(45) Veröffentlichungstag und Bekanntmachung des Hinweises auf die Patenterteilung: **18.04.2012**
(21) Anmeldenummer: 08101869.9
(22) Anmeldetag: 22.02.2008
(51) Int. Cl.: G01K 3/00, G01K 15/00

(54) **Temperaturauslösegerät**
Temperature release device
Outil de détachement à température

(30) Priorität: 07.03.2007 DE 102007011468
(43) Veröffentlichungstag der Anmeldung: 10.09.2008
(73) Patentinhaber: Kriwan Industrie-Elektronik GmbH, 74670 Forchtenberg (DE)
(72) Erfinder: Peng, Xiaoming, 74613, Öhringen (DE)
(74) Vertreter: Tetzner, Michael

(56) Entgegenhaltungen:
- DE-A1- 4 210 848
- US-A- 5 282 685

## Beschreibung

Die Erfindung betrifft ein Temperaturauslösegerät zum sicheren Abschalten eines Verbrauchers, insbesondere eines Motors, mit wenigstens einem Eingang zum Aufnehmen wenigstens eines temperaturabhängigen Eingangssignals, einer Auswertungsschaltung zur Erzeugung eines Ausgangssignals, wenn das Eingangssignal einen Vorgabewert erreicht und Mitteln zur Erzeugung eines Auslösesignals, wenn das Ausgangssignal erzeugt wird.

Heutzutage werden sicherheitsrelevante Aufgaben vermehrt durch Elektronik übernommen. Ein typisches Beispiel ist ein Temperaturauslösegerät einer motorgetriebenen Maschine. Das Temperaturauslösegerät erfasst die Temperatur der Maschine oder Anlage mittels Temperatursensoren. Die erfassten Temperaturinformationen werden ausgewertet und mit vordefinierten Gefahrkriterien verglichen. Sind die Gefahrkriterien erfüllt, öffnet das Auslösegerät die Sicherheitskette durch ein Schaltelement, beispielsweise ein Relais, und schaltet somit die Maschine (Motor) oder Anlage ab.

Durch die rasante Entwicklung der Mikrocontroller-Technologie, aber auch wegen der umfangreichen Entstörungsmaßnahmen und immer zahlreicher werdenden Funktionen, wie Diagnosen und Kommunikationsfähigkeiten, wird die Auswertung verstärkt mit Mikrocontrollern realisiert.

Der Schwachpunkt derartiger Auswertungsschaltungen besteht aber in der Störempfindlichkeit der Bauteile. Mit steigender Anzahl und Komplexität von Bauteilen steigt die Ausfallwahrscheinlichkeit. Außerdem können bei Mikrocontrollern Mikroelektronik- und Softwarefehlern hinzukommen. Dabei kann schon ein einziger Fehler die Überwachungsfunktion außer Kraft setzen, sodass die zu überwachende Maschine oder Anlage unbemerkt ohne Schutz läuft.

In der DE-A1-36 14 552 wird ein Schutzschaltgerät der Installationstechnik beschrieben. Zur Erhöhung der Sicherheit ist hier für jedes elektronische Bauteil ein redundantes Bauteil vorgesehen ist.

Die DE-A1-42 10 848 beschreibt ein eine Sicherheitseinrichtung mit einer redundanten Auswerteeinheit, deren Schwellenwertschalter zweifach ausgelegt sind, wobei ein zu überwachendes Eingangssignal und ein vorgebbarer, gemeinsamer Vergleichswert den Eingängen der beiden Schwellenwertschalter zugeführt wird. Die Ausgangssignale der beiden Schwellenwertschalter werden über ein ODER-Glied einer als Relais ausgebildeten Schalteinrichtung zugeführt.Der Erfindung liegt die Aufgabe zugrunde, das Temperaturauslösegerät weiter zu verbessern, sodass insbesondere eine höhere Sicherheitsstufe gewährleistet ist.

Erfindungsgemäß wird diese Aufgabe durch die Merkmale des Anspruches 1 gelöst.

Das erfindungsgemäße Temperaturauslösegerät zum sicheren Abschalten eines Verbrauchers, insbesondere eines Motors, besteht im Wesentlichen aus wenigstens einem Eingang zum Aufnehmen wenigstens eines temperaturabhängigen Sensorsignals als Eingangssignals, einem ersten Auswertungskanal zur Erzeugung eines ersten Ausgangssignals, wenn das Eingangssignal einen Vorgabewert erreicht und Mitteln zur Erzeugung eines Auslösesignals, wenn das Ausgangssignal erzeugt wird. Weiterhin ist ein zweiter, redundanter Auswertungskanal vorgesehen, der mit dem gleichen Eingangssignal wie der erste Auswertungskanal gespeist wird und ein zweites Ausgangssignal erzeugt, wenn das Eingangssignal denselben Vorgabewert erreicht. Der erste Auswertungskanal weist ein erstes Schaltelement auf, das durch das erste Ausgangssignal gesteuert wird und der zweite Auswertungskanal sieht ein zweites Schaltelement vor, das durch das zweite Ausgangssignal gesteuert wird. Die Mittel zur Erzeugung eines Auslösesignals weisen ein mit den beiden Auswertungskanälen über das erste und zweite Schaltelement in Verbindung stehendes Relais auf und erzeugen das Auslösesignal, wenn wenigstens eines der beiden Ausgangssignale erzeugt wird, wobei das erste und zweite Schaltelement eine UND-Verknüpfung bilden und mit dem Relais gemäß folgender Bedingung in Verbindung stehen:
angezogener Relaiskontakt = leitendes erstes Schaltelement UND leitendes zweites Schaltelement.

Im Gegensatz zu dem aus der DE-A1-36 14 552 bekannten Schutzschaltgerät werden erfindungsgemäß zwei voneinander unabhängige Auswertungskanäle vorgesehen, die denselben Vorgabewert überwachen. Es handelt sich somit um redundante Auswertungskanäle, die eine höhere Sicherheitsanforderungsstufe gewährleisten.

Der zweite Auswertungskanal wird vorzugsweise durch eine Analogschaltung gebildet. In beiden Auswertungskanälen funktioniert die Auswertung unabhängig voneinander. Auf diese Weise ist gewährleistet, dass die komplette Überwachungsfunktion, inklusive des Überwachungskriteriums des Auslösegerätes unverändert und uneingeschränkt gewährleistet ist, selbst wenn einer der Auswertungskanäle durch Störung oder Fehler kein Ausgangssignal zur Erzeugung eines Auslösesignals mehr erzeugen kann.

Die Funktion des zweiten Auswertungskanals beschränkt sich vorzugsweise auf die reine Überwachungsfunktion. Dies hat einerseits einen Kostenvorteil und erhöht andererseits die Zuverlässigkeit des Gerätes durch die verringerte Ausfallrate von Bauelementen. Nichtsicherheitsrelevante Funktionen, wie Diagnosen und Kommunikationen, sollten daher ausschließlich im ersten Auswertungskanal umgesetzt werden.

Der zweite Auswertungskanal weist gemäß einem bevorzugten Ausführungsbeispiel einen Tiefpassfilter zum Ausfiltern etwaiger EMV-Störungen auf. Außerdem kann er einen Komparator, insbesondere ein Schmitttrigger-Komparator umfassen, an dessen Ausgang das Ausgangssignal erzeugt wird. An einem Eingang des Komparators könnte der Vorgabewert durch zwei Widerstände gebildet werden, während am anderen Eingang das Eingangssignals anliegt.

Die Erfindung betrifft ferner einen Motor mit wenigstens einem Temperatursensor zur Überwachung wenigstens eines Parameters des Motors sowie dem oben beschriebenen Temperaturauslösegerät, wobei der Temperatursensor mit dem Eingangssignal des Temperaturauslösegerät in Verbindung steht und ein temperaturabhängiges Sensorsignal erzeugt, das als Eingangssignal dem Eingang des Temperaturauslösegeräts zugeführt wird.

Weitere Vorteile und Ausgestaltungen der Erfindung werden im Folgenden anhand der Beschreibung einiger Ausführungsbeispiele und der Zeichnung näher erläutert.

In der Zeichnung zeigen
- Fig. 1: ein Blockschaltbild eines erfindungsgemäßen Temperaturauslösegeräts,
- Fig. 2: ein Schaltbild des Temperaturauslösegeräts mit wenigstens einem analogen Auswertungskanal und einer ersten Variante der Verknüpfung von Schaltelementen,
- Fig. 3: ein Schaltbild eines Temperaturauslösegeräts mit wenigstens einem analogen Auswertungskanal und einer zweiten Variante der Verknüpfung von Schaltelementen,
- Fig. 4: ein Schaltbild eines Temperaturauslösegeräts mit zwei analogen Auswertungskanälen,
- Fig.5: ein Schaltbild eines Temperaturauslösegeräts mit mehreren auf einen Eingang geschalteter Temperatursensoren und
- Fig. 6: ein Schaltbild eines Temperaturauslösegeräts mit mehreren Eingängen.

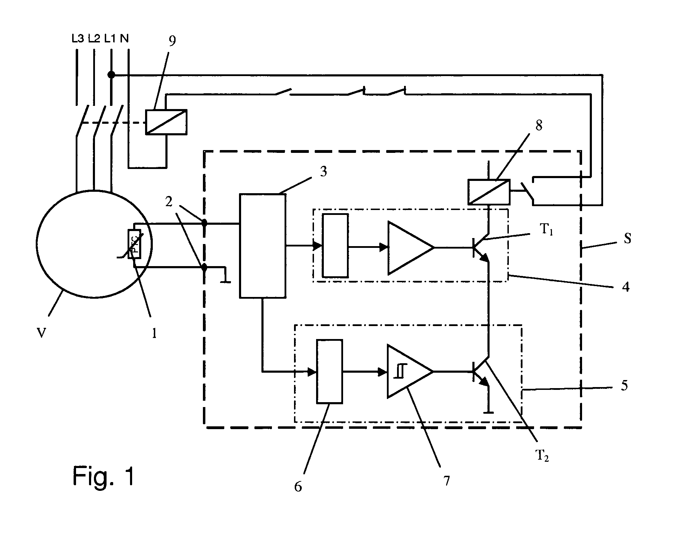

In Fig. 1 ist ein Temperaturauslösegerät S zum sicheren Abschalten eines Verbrauchers V, insbesondere eines Motors dargestellt. Der Verbraucher V weist wenigstens einen Temperatursensor 1, insbesondere einen PTC-Widerstand, auf, der ein Temperatursignal erzeugt, das als Eingangssignal einem Eingang 2 des Temperaturauslösegeräts S zugeführt wird.

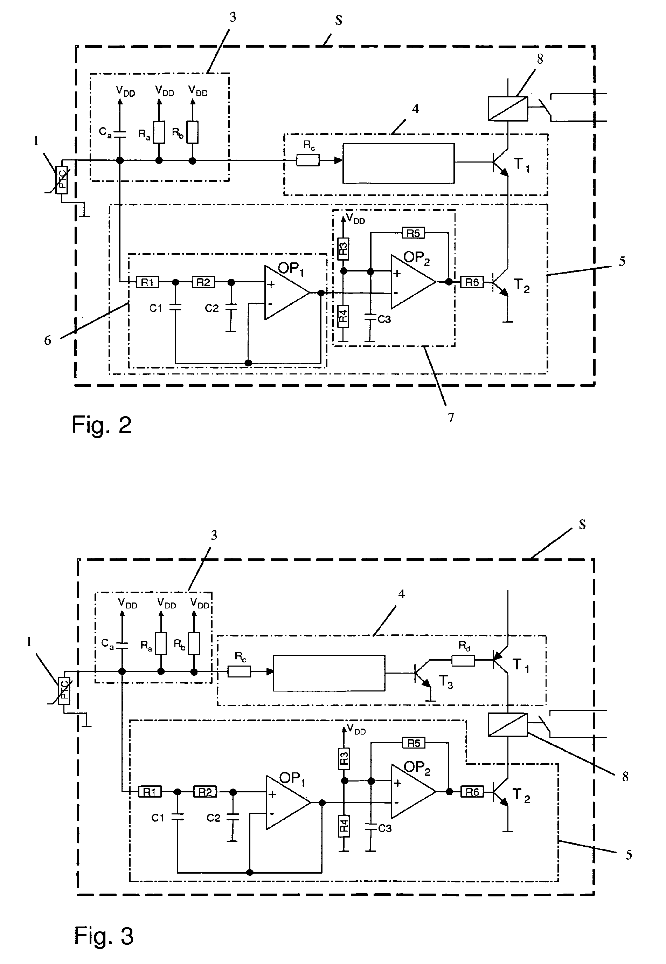

Anhand der Fig. 1 und Fig. 2 wird im Folgenden der Aufbau und die Funktion des Temperaturauslösegeräts S näher erläutert.

Das Temperaturauslösegerät S weist zunächst eine Spannungsumwandlungsschaltung 3 auf, die den temperaturabhängigen Widerstandswert des Temperatursensors 1 in einen Spannungswert umwandelt. Dies kann beispielsweise über die Widerstandsschaltung mit Rₐ und R_{b} wie in den Figuren dargestellt erfolgen. Das umgewandelte Eingangssignal wird dann einem ersten Auswertungskanal 4 und parallel dazu einem zweiten, redundanten Auswertungskanal 5 zugeführt. Beide Auswertungskanäle arbeiten völlig unabhängig voneinander und überwachen denselben Vorgabewert.

Der erste Auswertungskanal 4 ist wahlweise als Analogschaltung oder mit einem Mikrokontroller ausgebildet. Am Ausgang des ersten Auswertungskanal 4 wird das Ausgangssignal erzeugt, welches ein erstes Schaltelement, insbesondere einen Transistor T₁ steuert.

Der zweite Auswertungskanal 5 wird durch eine Analogschaltung realisiert, die zunächst einen Tiefpassfilter 6 zum Ausfiltern etwaiger EMV-Störungen aufweist. Weiterhin ist ein Komparator 7, insbesondere ein Schmitttrigger-Komparator vorgesehen, an dessen Ausgang das Ausgangssignal erzeugt wird, welches ein zweites Schaltelement, insbesondere einen Transistor T₂ steuert.

Der Tiefpassfilter 6 sorgt dafür, dass die über den Temperatursensor 1 und seine Zuleitungen eingekoppelten EMV-Störungen im Wesentlichen ausgefiltert werden. Hierfür wird beispielsweise ein Analog-Tiefpass-Filter zweiter Ordnung (Butter-Worth) eingesetzt. Er besteht aus den Widerständen R1, R2 und Kapazitäten C1 und C2 und dem Operationsverstärker OP₁.

Der aus Fig. 2 ersichtliche Schmitttrigger-Komparator 7 wird durch die Widerstände R3, R4 und R5 sowie die Kapazität C3 und den Operationsverstärker OP₂ gebildet. An den beiden Eingängen des Operationsverstärkers OP₂ liegen zum einen das der Temperatur des Verbrauchers entsprechende Eingangssignal und zum anderen der durch R3 und R5 definierte Vorgabewert an, die miteinander verglichen. Liegt die Temperatur höher als der Vorgabewert, schaltet der Operationsverstärker auf "low" und sperrt das durch den Transistor T₂ gebildete zweite Schaltelement.

Weiterhin sind Mittel 8 zur Erzeugung eines Auslösesignals vorgesehen, die beispielsweise durch ein Relais gebildet werden. Das zweite Schaltelement T₂ des zweiten Auswertungskanals 5 und das entsprechende erste Schaltelement T₁ des ersten Auswertungskanals 4 bilden eine UND-Verknüpfung und stehen mit den Mitteln 8 gemäß folgender Bedingung in Verbindung:
Angezogener Relaiskontakt = leitendes zweites Schaltelement T₂ UND leitendes erstes Schaltelement T₁.

Dies bedeutet, dass der Relaiskontakt abfällt und die weitere Stromversorgung für einen Schütz 9 des Verbrauchers 4 unterbricht, sobald wenigstens einer der beiden Auswertungskanäle 4, 5 eine Sperrung des ersten bzw. zweiten Schaltelements T₁ bzw. T₂ bewirkt.

In Fig. 3 ist eine alternative UND-Verknüpfung der beiden Schaltelemente T₁ und T₂ in Verbindung mit den Mitteln 8 zur Erzeugung des Auslösesignals dargestellt.

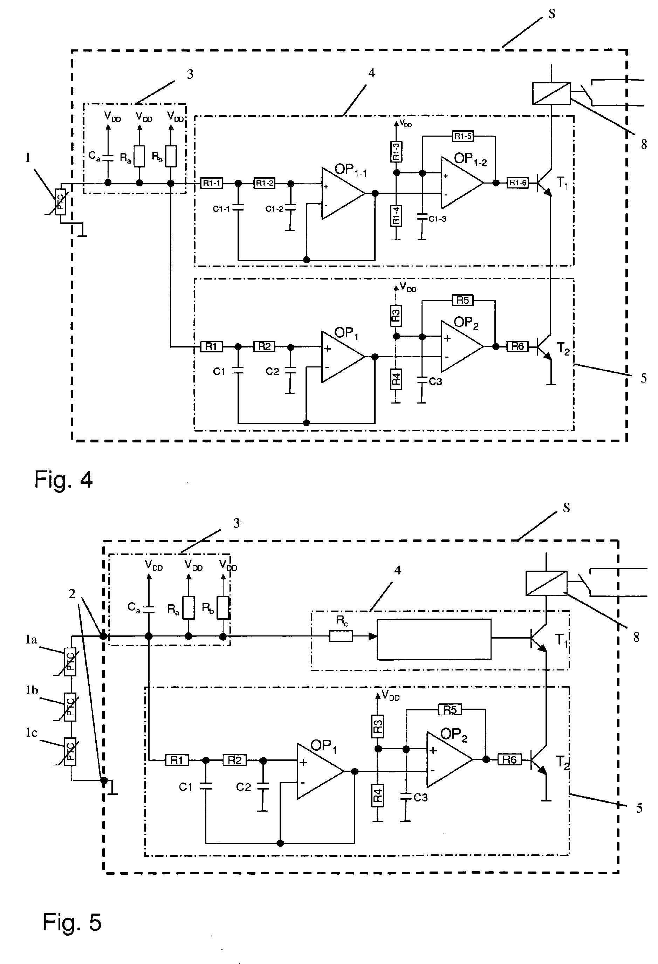

Fig. 4 zeigt ein Schaltbild eines kostenoptimierten Temperaturauslösegeräts mit zwei analogen Auswertungskanälen, die zweckmäßigerweise identisch aufgebaut sind.

Der Verbraucher V gemäß Fig.5 weist drei in Reihe geschaltete Temperatursensoren 1a, 1b, 1c zur Überwachung der Temperatur des Motors sowie ein Temperaturauslösegerät S auf. Mit mehreren an verschiedenen Stellen des Verbraucher V angebrachten Temperatursensoren ist das Auslösegerät in der Lage, beispielsweise die Temperaturen in den drei Wicklungen eines dreiphasenbetriebenen Motors zu überwachen. Durch die Reihenschaltung der Temperatursensoren erreicht man eine kostenoptimierte Lösung zur Überwachung von verschiedenen Parametern und/oder verschiedenen Stellen eines Verbrauchers.

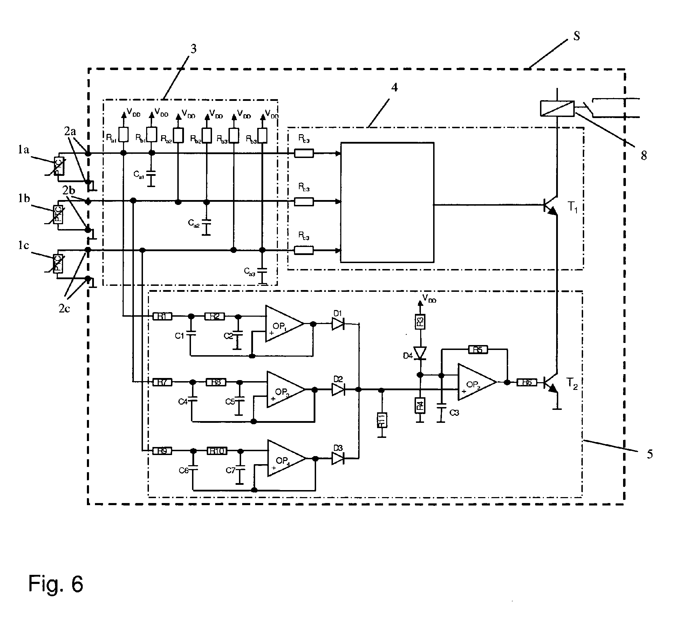

In Fig. 6 wird aufgezeigt, dass das Temperaturauslösegerät auch drei Eingänge 2a, 2b, 2c vorsehen kann, wobei jeder Eingang mit einem der drei Temperatursensoren 1a, 1b, 1c verbunden ist. Ist der Auswertungskanal 5 in Analogschaltung ausgeführt, sind für jeden Eingang zunächst ein separater Tiefpassfilter vorgesehen. Durch die Dioden D1, D2 und D3 gebildete Diodenschaltung wird nur das der höchsten Temperatur entsprechende Signal zum Komparator weitergeleitet. Somit ist sichergestellt, dass das Erreichen des Vorgabewertes durch irgend eine der zu überwachenden Temperaturen sicher zur Auslösung führt. Die Diode D4 in der Komparatorschaltung dient der Temperaturkompensation des temperaturabhängigen Spannungsabfalls der Dioden D1, D2 und D3.

## Patentansprüche

1. Temperaturauslösegerät (S) zum sicheren Abschalten eines Verbrauchers (V), insbesondere eines Motors, mit
a. wenigstens einem Eingang (2) zum Aufnehmen wenigstens eines temperaturabhängigen Sensorsignals als Eingangssignal,
b. einem ersten Auswertungskanal (4) zur Erzeugung eines ersten Ausgangssignals, wenn das Eingangssignal einen Vorgabewert erreicht,
c. einem zweiten, redundanten Auswertungskanal (5), der mit dem gleichen Eingangssignal wie der erste Auswertungskanal gespeist wird und ein zweites Ausgangssignal erzeugt, wenn das Eingangssignal den Vorgabewert erreicht,
d. wobei der erste Auswertungskanal (4) ein erstes Schaltelement (T₁) aufweist, das durch das erste Ausgangssignal gesteuert wird und der zweite Auswertungskanal (5) ein zweites Schaltelement (T₂) aufweist, das durch das zweite Ausgangssignal gesteuert wird,
e. und Mitteln (8) zur Erzeugung eines Auslösesignals, die ein mit den beiden Auswertungskanälen über das erste und zweite Schaltelement (T₁, T₂) in Verbindung stehendes Relais aufweisen und das Auslösesignal erzeugen, wenn wenigstens eines der beiden Ausgangssignale erzeugt wird,
f. wobei das erste und zweite Schaltelement (T₁, T₂) eine UND-Verknüpfung bilden und mit dem Relais gemäß folgender Bedingung in Verbindung stehen:
angezogener Relaiskontakt = leitendes erstes Schaltelement (T₁) UND leitendes zweites Schaltelement (T₂).

2. Temperaturauslösegerät nach Anspruch 1, **dadurch gekennzeichnet, dass** der erste Auswertungskanal (4) einen Mikrokontroller aufweist und der zweite Auswertungskanal (5) durch eine Analogschaltung gebildet wird.

3. Temperaturauslösegerät nach Anspruch 1, **dadurch gekennzeichnet, dass** der zweite Auswertungskanal (5) einen Tiefpassfilter zum Ausfiltern etwaiger auf dem Eingangssignal eingekoppelter EMV-Störungen aufweist.

4. Temperaturauslösegerät nach Anspruch 1, **dadurch gekennzeichnet, dass** der zweite Auswertungskanal (5) einen Komparator (7) umfasst, an dessen Ausgang das Ausgangssignal erzeugt wird.

5. Temperaturauslösegerät nach Anspruch 4, **dadurch gekennzeichnet, dass** an einem der Eingänge des Komparators (7) der durch zwei Widerstände (R3, R5) gebildete Vorgabewert und am anderen Eingang das durch einen Tiefpassfilter gefilterte Eingangssignal anliegen.

6. Temperaturauslösegerät nach Anspruch 4, **dadurch gekennzeichnet, dass** an den Ausgang des Komparators (7) das eine Schaltelement (T₂) angeschlossen ist.

7. Motor mit wenigstens einem Temperatursensor (1) zur Überwachung der Temperatur des Motors sowie einem Temperaturauslösegerät (S) gemäß einem oder mehreren der vorhergehenden Ansprüche, wobei der Temperatursensor (1) mit dem wenigstens einen Eingang des Temperaturauslösegeräts (S) in Verbindung steht.

## Claims

1. A temperature tripping device (S) for reliably shutting down a load (V), especially a motor, having
a. at least one input (2) for receiving at least one temperature-dependent sensor signal as an input signal,
b. a first evaluation channel (4) for generating a first output signal if the input signal reaches a preset value,
c. a second, redundant, evaluation channel (5) which is supplied with the same input signal as the first evaluation channel and which generates a second output signal if the input signal reaches the preset value,
d. wherein the first evaluation channel (4) has a first switching element (T₁) which is controlled by the first output signal and the second evaluation channel (5) has a second switching element (T₂) which is controlled by the second output signal,
e. and means (8) for generating a trip signal having a relay connected to the two evaluation channels via the first and second switching element (T₁, T₂) and generating the trip signal if at least one of the two output signals is generated,
f. wherein the first and second switching element (T₁, T₂) form an AND combination and are connected to the relay in accordance with the following condition:
relay contact pulled in = conductive first switching element (T₁) AND conductive second switching element (T₂).

2. A temperature tripping device according to claim 1, **characterised in that** the first evaluation channel (4) has a microcontroller and the second evaluation channel (5) is formed by an analogue circuit.

3. A temperature tripping device according to claim 1, **characterised in that** the second evaluation channel (5) has a low-pass filter for filtering out any EMC interference coupled into the input signal.

4. A temperature tripping device according to claim 1, **characterised in that** the second evaluation channel (5) includes a comparator (7), at the output of which the output signal is generated.

5. A temperature tripping device according to claim 4, **characterised in that** the preset value formed by two resistors (R3, R5) is applied to one of the inputs of the comparator (7), and the input signal filtered through a low-pass filter is applied to the other input.

6. A temperature tripping device according to claim 4, **characterised in that** the one switching element (T₂) is connected to the output of the comparator (7).

7. A motor having at least one temperature sensor (1) for monitoring the temperature of the motor and having a temperature tripping device (S) according to one or more of the preceding claims, wherein the temperature sensor (1) is connected to the at least one input of the temperature tripping device (S).

## Revendications

1. Appareil de découplage thermique (S) pour la déconnexion fiable d'un consommateur (V), en particulier d'un moteur, aves
a. au moins une entrée (2) pour la réception d'au moins un signal de détection, dépendant de la température, en tant que signal d'entrée,
b. un premier canal d'évaluation (4) pour générer un premier signal de sortie, quand le signal d'entrée a atteint une valeur déterminée,
c. un deuxième canal d'évaluation (5) redondant, qui est alimenté avec le m1eme signal d'entrée que le premier canal d'évaluation, et génère un deuxième signal de sortie, quand le signal d'entrée a atteint la valeur déterminée,
d. sachant que le premier canal d'évaluation (4) est doté d'un premier élément de commutation (T₁), qui est commandé par le premier signal de sortie, et que le deuxième canal d'évaluation (5) est doté d'un deuxième élément de commutation (T₂), qui est commandé par le deuxième de sortie,
e. et des moyens (8), qui, destinés à générer un signal de découplage, sont dotés d'un relais, en relation avec les deux canaux d'évaluation, par l'intermédiaire du premier et du deuxième élément de commutation (T₁, T₂), et génèrent le signal de sortie,
f. sachant que le premier et le deuxième élément de commutation (T₁, T₂) forment une fonction logique ET et sont en relation avec le relais dans les conditions suivantes :
Contact du relais excité = premier élément de commutation (T₁) passant ET deuxième élément de commutation (T₂) passant

2. Appareil de découplage thermique selon la revendication 1, **caractérisé en ce que** le premier canal d'évaluation (4) est doté d'un microcontrôleur et que le deuxième canal d'évaluation (5) est formé par un circuit analogique.

3. Appareil de découplage thermique selon la revendication 1, **caractérisé en ce que** le deuxième canal d'évaluation (5) est doté d'un filtre passe-bas pour extraire par filtration toutes perturbations EMV injectées sur le signal d'entrée.

4. Appareil de découplage thermique selon la revendication 1, **caractérisé en ce que** le deuxième canal d'évaluation (5) comprend un comparateur (7), à la sortie duquel le signal de sortie est généré.

5. Appareil de découplage thermique selon la revendication 4, **caractérisé en ce qu'**à l'une des entrées du comparateur (7) se trouve la valeur de détermination, formée par deux résistances (R3, R5) et qu'à l'autre entrée se trouve un signal d'entrée, filtré par un filtre passe-bas.

6. Appareil de découplage thermique selon la revendication 4, **caractérisé en ce que** l'élément de commutation (T₂) est raccordé à la sortie du comparateur (7).

7. Moteur avec au moins un détecteur de température (1) pour le contrôle de la température du moteur, ainsi qu'un appareil de découplage thermique (S) selon l'une ou plusieurs des revendications précédentes, sachant que le détecteur de température (1) est en relation avec l'au moins une entrée de l'appareil de découplage thermique (S).
